**Europäisches Patentamt**

**European Patent Office**

**Office européen des brevets**

(19)

(11) Veröffentlichungsnummer: **0 252 255 B1**

# EUROPÄISCHE PATENTSCHRIFT

(12)

(45) Veröffentlichungstag der Patentschrift: **05.08.92**

(51) Int. Cl.⁵: **H02G 3/06**

(21) Anmeldenummer: **87107239.3**

(22) Anmeldetag: **19.05.87**

(54) **Kabelzugentlastungsstück.**

(30) Priorität: **26.06.86 DE 8617096 U**
**26.06.86 DE 8617095 U**

(43) Veröffentlichungstag der Anmeldung:
**13.01.88 Patentblatt 88/02**

(45) Bekanntmachung des Hinweises auf die
Patenterteilung:
**05.08.92 Patentblatt 92/32**

(84) Benannte Vertragsstaaten:
**AT BE CH DE ES FR IT LI NL**

(56) Entgegenhaltungen:
**DE-U- 8 027 128**
**FR-A- 2 520 945**
**GB-A- 2 124 040**

(73) Patentinhaber: **Viessmann Werke GmbH & Co.**
**Postfach 10 Viessmannstrasse**
**W-3559 Allendorf (Eder)(DE)**

(72) Erfinder: **Viessmann, Hans, Dr.**
**Im Hain**
**W-3559 Battenberg/Eder(DE)**

(74) Vertreter: **Wolf, Günter, Dipl.Ing.**
**Patentanwälte Dipl.-Ing. Amthor Dipl.-Ing.**
**Wolf Postfach 70 02 45 An der Mainbrücke 16**
**W-6450 Hanau 7(DE)**

## Beschreibung

Die Erfindung betifft ein Kabelzugentlastungsstück mit mindestens einer seitlich zugänglichen und mit Klemmelement versehenen Kabeldurchgriffsöffnung.

Kabelzugentlastungsstücke sind allgemein bekannt und in Benutzung bspw. in einer Ausführungsform gemäß DE-U-80 27 128. Abgesehen davon, daß derartige Kabelzugentlastungsstücke an jeder Art von Gerätegehäusen vorgesehen werden können, um aus dem Gerätegehäuse herausführende Kabel einerseits gegen Zug zu entlasten und andererseits dafür zu sorgen, daß die Kabelisolation durch Reibung an metallischen Durchgriffsöffnungen der Gehäusewandungen nicht beschädigt werden kann, sind die Kabelzugentlastungsstücke der eingangs genannten Art insbesondere für Heizkesselverkabelungen vorgesehen und zwar wiederum insbesondere für solche Verkabelungen, bei denen die Kabelverbindungen der Kabel zwischen Heizkesselgehäuse und Regelgehäuse durch Steckverbindungen hergestellt werden.

Der Erfindung liegt die Aufgabe zugrunde, ein Kabelzugentlastungsstück der eingangs genannten Art dahingehend zu verbessern, daß dieses bereits als fest mit dem betreffenden Gehäusewandteil des betreffenden Gerätes montiertes Teil mitgeliefert werden kann und dies mit der Maßgabe, daß trotz der Festmontage über einer entsprechend großen, ein Durchführen des Kabelsteckers selbst zulassenden Durchgriffsöffnung der Gehäusewand die Kabeldurchführung und Einbringung in das Kabelzugentlastungsstück nachträglich bewirkt werden kann.

Diese Aufgabe ist mit einem Kabelzugentlastungsstück der eingangs genannten Art nach der Erfindung durch die im Kennzeichen des Hauptanspruches angeführten Merkmale gelöst. Vorteilhafte Weiterbildungen ergeben sich nach den Unteransprüchen.

Nach der GB-A-2 124 040 ist zwar ein elektrisches Installationselement für einen Kabelanschluß bekannt, an dem ebenfalls ein Teil schwenkbar ausgebildet ist. Dieses bekannte Installationselement dient jedoch anderen Zwecken und ist für die Lösung der hier speziell gestellten Aufgabe nicht geeignet, da durch das abschwenkbare Teil lediglich der Innenraum des Installationselementes zugänglich ist, aber keine Öffnung in der Wand, die vom erfindungsgemäß ausgebildeten Kabelzugentlastungsstück abgedeckt wird. Außerdem handelt es sich beim abschwenkbaren Teil nach der GB-A-2 124 040 nicht um das Befestigungsteil für das Installationselement.

Durch die erfindungsgemäße Ausbildung ist demgegenüber das Kabelzugentlastungsstück von vornherein, d.h., im Lieferzustand integrales Bauteil der betreffenden Gehäuseverkleidungswand und deckt weitgehend die unter dem Kabelzugentlastungsstück befindliche Durchgriffsöffnung dieser Wand ab. Da das Entlastungsstück erfindungsgemäß mit einer scharnierartig angelenkten Befestigungsleiste versehen ist, mit der die feste Verbindung hergestellt ist, kann das Hauptteil des Entlastungsstückes, das die mindestens eine Kabeldurchgriffsöffnung aufweist, nach Lösen von Befestigungsschrauben an diesem Teil einfach von der betreffenden Wand abgeschwenkt werden, wodurch die Durchgriffsöffnung der Wand freigelegt wird und das Kabel mit seinem Stecker durch diese entsprechend große Durchgriffsöffnung durchgeschoben werden kann. Danach wird das abgeschwenkte Teil einfach wieder an die Wand angelegt und mit dieser verschraubt, wonach die Fixierung des Kabels am Kabelzugentlastungsstück in herkömmlicher Weise durch Klemmfestlegung erfolgt. Abgesehen davon, daß durch die vorgegebene Festanordnung des Kabelzugentlastungsstückes an der Geräteverkleidung die Anordnung des Kabelzugentlastungsstückes nicht vergessen werden kann, ist es möglich, die Klemmanschlüsse der Kabelenden an den betreffenden Gerätestellen beim Hersteller unmittelbar vorzusehen, wobei das andere Kabelende ebenfalls bereits mit seinem Stecker fest verbunden sein kann, d.h., der Stecker muß zwecks Durchführung des Kabels durch die Wand und für die Einführung in das Kabelzugentlastungsstück nicht vom Kabelende gelöst und nach der Durchführung wieder angeschlossen werden. Eine vorteilhafte Weiterbildung des Kabelzugentlastungsstückes besteht darin, daß die Befestigungsleiste und das die mindestens eine Kabeldurchgriffsöffnung aufweisende Teil aus einem Stück aus Kunststoff gebildet sind und der scharnierartige Verbindungsbereich in Form einer Knickkerbe ausgebildet ist. Dadurch kann das ganze Kabelzugentlastungsstück einschließlich seiner Befestigungsleiste vorteilhaft als ein Kunststoffspritzgußteil hergestellt werden, das lediglich noch mit den Klemmschrauben für die Kabelfixierung und mit den Befestigungsschrauben an den Befestigungsschraubenaufnahmen zu versehen ist. Bezüglich dieser Befestigungsschrauben ist das Kabelzugentlastungsstück vorteilhaft derart ausgebildet, daß die Befestigungsschraubenaufnahme in Form eines Sockels mit Durchgangsbohrungen ausgebildet und in der Bohrung eine Halteschraube mit einem gewindefreien Durchgriffsschaft zwischen Schraubkopf und mit Gewinde versehenem Schraubenende angeordnet ist. Dadurch sind die Befestigungsschrauben unverlierbar dem lösbaren und abschwenkbaren Teil des Entlastungsstückes zugeordnet, d.h., die Befestigungsschrauben verbleiben auch beim Abschwenken dieses Teiles des Kabelzugentlastungsstückes an diesem und können unmittelbar nach Zurückschwenken an die betreffende Wand wieder mit dieser verschraubt werden.

Da es sich beim Kabelzugentlastungsstück um ein Element mit allen notwendigen Elementen handeln soll und diese unverlierbar und verfügbar sein sollen, besteht eine vorteilhafte Weiterbildung darin, daß das Klemmelement aus einem begrenzt elastischen Kunststoff-Gewindestift zu bilden und dieser kabelandruckseitig mit einem Sperrkopf zu versehen, dessen Durchmesser geringfügig größer ist als der Innendurchmesser der Gewindeaufnahme, wobei zwischen Sperrkopf und Gewindeende des Gewindestiftes dieser ein gewindefreies Zwischenstück aufweist mit einem Durchmesser kleiner als der Gewindeinnendurchmesser und einer Länge größer als die der Gewindeaufnahme.

Das erfindungsgemäße Kabelzugentlastungsstück wird nachfolgend anhand der zeichnerischen Darstellung eines Ausführungsbeispiels näher erläutert.

Es zeigt stark vergrößert

Fig. 1     eine Draufsicht auf das Kabelzugentlastungsstück mit einem Teilschnitt;

Fig. 2     eine Seitenansicht des Kabelzugentlastungsstückes und

Fig. 3     eine Seitenansicht teilweise im Schnitt des Kabelzugentlastungsstückes von der Einschubseite aus gesehen.

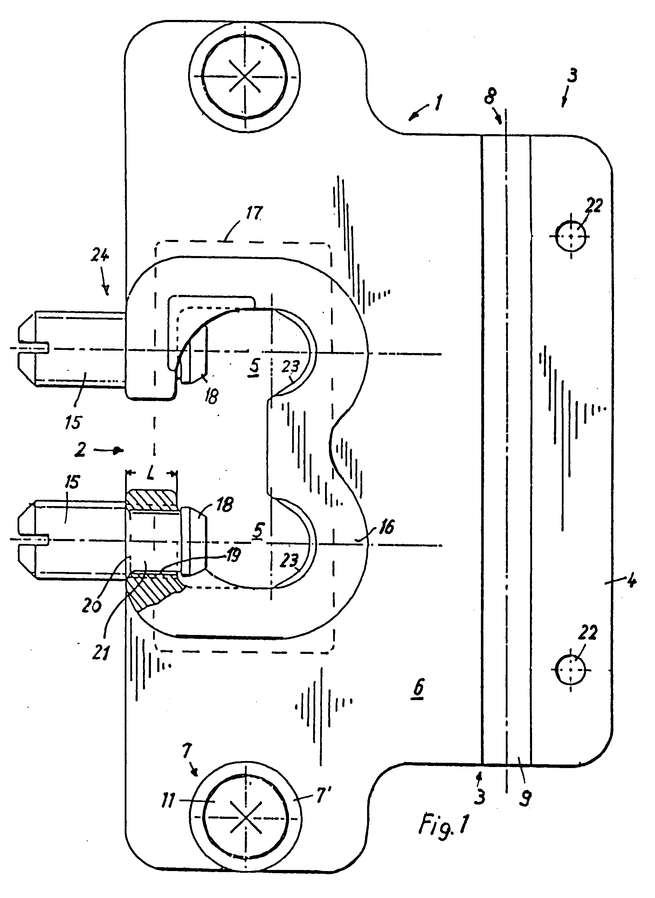

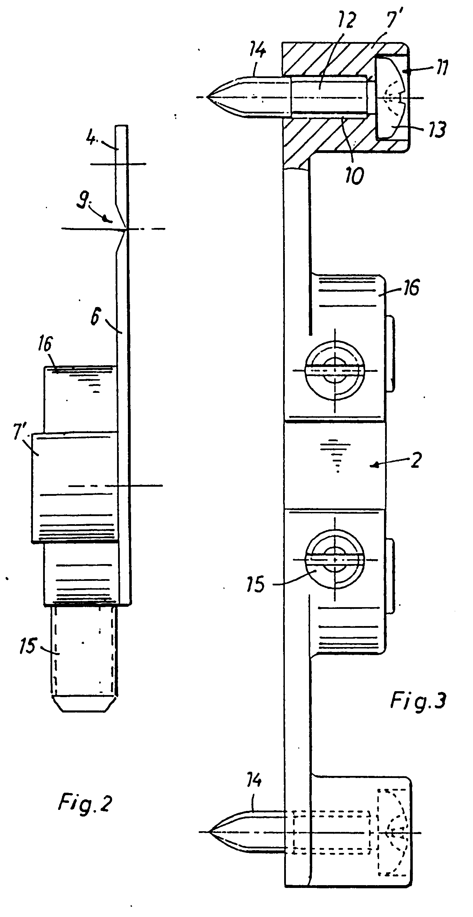

Wie aus den Fig. 1 bis 3 erkennbar, ist das Kabelzugentlastungsstück 1 mit zwei seitlich zugänglichen und mit Klemmelementen 15 versehenen Kabeldurchgriffsöffnungen 5 versehen, wobei das Entlastungsstück 1 an einem von der Einführungsöffnung 2 freien Längsrand 3 mit einer scharnierartig angelenkten Befestigungsleiste 4 und der die eigentlichen Kabeldurchgriffsöffnungen 5 aufweisende Teil 6 mit zwei Befestigungsschraubenaufnahmen 7 in Form von Sockeln 7' versehen ist. An sich wäre eine regelrechte Gelenkverbindung zwischen dem Teil 6 und der Befestigungsleiste 4 möglich, was jedoch eine separate Ausformung dieser beiden genannten Teile erforderlich machte. Bevorzugt wird deshalb die dargestellte Ausführungsform, d.h. eine Ausführungsform derart, daß die Befestigungsleiste 4 und das die Kabeldurchgriffsöffnungen 5 aufweisende Teil 6 aus einem Stück gebildet sind und der scharnierartige Verbindungsbereich 8 in Form einer Knickkerbe 9 ausgebildet ist, wie aus den Fig. 1, 2 ersichtlich. Bei entsprechender Länge kann das Kabelzugentlastungsstück selbstverständlich mehrere Einführungsöffnungen 2 aufweisen, die jeweils, wie dargestellt, zu zwei Kabeldurchgriffsöffnungen 5 führen. Das ganze Kabelzugentlastungsstück wird an der betreffenden Gerätewand, von der nur die für den Durchschub eines Steckers entsprechend groß bemessene Durchgriffsöffnung 17 gestrichelt in Fig. 1 angedeutet ist, im Bereich der Öffnungen 22 der Befestigungsleiste 4 mit nicht ohne weiteres lösbaren Nieten befestigt und das andere Teil 6 lösbar mit den Halteschrauben 11, deren spezielle Zuordnung zum Teil 6 noch unter Bezug auf Fig. 3 näher erläutert wird. Für die Durchführung von zwei bereits mit Steckern versehenen Kabeln werden die Schrauben 11 gelöst, und das ganze Teil 6 wird in bezug auf die festsitzende Befestigungsleiste 4 abgeschwenkt, so daß die Kabel mit ihren Steckern durch die Öffnung 17 des Verkleidungsbleches von der anderen Seite aus durchgeführt werden können, wobei dann beim Zurückschwenken des Teiles 6 die Kabel gleichzeitig mit in die Einführungsöffnungen 2 eingeführt und in den beiden Kabeldurchgriffsöffnungen 5, nachdem die beiden Schrauben an der Wand wieder festgeschraubt sind, mittels der Klemmelemente 15 festgespannt werden, die ebenfalls unverlierbar am Kabelzugentlastungsstück in entsprechenden Gewinden angeordnet sind. Für die vorerwähnte, ebenfalls unverlierbare Zuordnung der beiden Halteschrauben 11 sind die Befestigungsschraubenaufnahmen 7 in Form von Sockeln 7' mit Durchgangsbohrungen 10 ausgebildet (Fig. 3), wobei in jeder Bohrung 10 die Halteschraube 11 mit einem gewindefreien Bohrungsdurchgriffsschaft 12 zwischen Schraubenkopf 13 und mit Gewinde 14 versehenem Schraubenende angeordnet ist. Bei den Gewinden 14 der Halteschrauben 11 handelt es sich um Holzschraubengewinde, deren größter Außendurchmesser etwas größer ist als der Durchmesser der Bohrungen 10, so daß diese Halteschrauben 11, da es sich beim Material des Kabelzugentlastungsstückes um schneidbaren Kunststoff handelt, einfach selbstschneidend durchgeschraubt werden können und zwar so weit, daß sich nach dem Durchschrauben nur noch der gewindefreie Bohrungsdurchgriffsschaft 12 mit entsprechend geringerem Außendurchmesser im Bereich der Durchgangsbohrung 10 befindet. Ohne gezieltes Zurückschrauben der Halteschrauben 11 aus den Befestigungsschraubenaufnahmen 7 sitzen also diese Halteschrauben ebenfalls unverlierbar am Kabelzugentlastungsstück fest.

Unter Bezug auf den Schnitteil der Fig. 1 ist jeder Kabeldurchgriffsöffnung ein Klemmelement 15 aus einem begrenzt elastischen Kunststoff-Gewindestift 24 zugeordnet, der, wie ersichtlich, kabelandruckseitig mit einem Sperrkopf 18 versehen ist, dessen Durchmesser geringfügig größer ist als der Innendurchmesser der Gewindeaufnahme 19. Zwischen dem vorteilhaft in Form eines Kegelstumpfes ausgebildeten Sperrkopf 18 und dem Gewindeende 20 des Gewindestiftes 24 ist dieser mit einem gewindefreien Zwischenstück 21 versehen, dessen Durchmesser kleiner ist als der Gewindeinnendurchmesser und das eine Länge L aufweist, die größer ist als die der Gewindeaufnahme 19. Durch diese Ausbildung kann der Gewindestift, ohne das Innengewinde der Gewindeaufnahme 19 zu verletzen, ohne weiteres in diese mit einer gewissen Kraftaufwendung eingetrieben werden, wodurch dann das Klemmelement 15 bzw. der Gewindestift 24 unverlierbar am Kabelzugentlastungsstück sitzt. Um die durch die Einführungsöffnung 2 seitlich eingeführte und dann in die Bereiche der Durchgriffsöffnungen 5 verschobenen Kabel (nicht dargestellt) festlegen zu können, werden die Gewindestifte 24 einfach gegen die durchlaufenden Kabel gespannt, wofür in bekannter Weise im Bereich der Durchgriffsöffnungen 5 kleine Verrastungsrippen 23, wie dargestellt, angeordnet sind. Aus der Darstellung ist auch ersichtlich, daß die Ausbildung des Sperrkopfes 18 in Form eines Kegelstumpfes den Vorteil eines weitgehend unbehinderten seitlichen Einschubes eines entsprechend dicken Kabels hat, da der Einschubquerschnitt zur Durchgriffsöffnung 5 durch die Kegelstumpfausbildung praktisch nicht verengt wird. Die sich entsprechenden Gewinde der Gewindeaufnahme 19 und des Gewindestiftes 24 sind vorteilhaft als Zwischennormgewinde, bspw. als M7- oder M 9-Gewinde ausgebildet. Unter "Zwischennormgewindegrößen" sind solche zu verstehen, bei denen es sich nicht um handelsübliche Gewinde handelt, d.h. ohne weiteres handelserhältliche und in der Regel allgemein verfügbare und stromleitende Gewindeschrauben aus Metall können im Kabelzugentlastungsstück als Ersatz, falls dies tatsächlich einmal notwendig sein sollte, nicht verwendet werden, da diese nicht in das Gewinde der Gewindeaufnahme des Kabelzugentlastungsstückes passen und eingeschraubt werden können.

**Patentansprüche**

1. Kabelzugentlastungsstück mit mindestens einer seitlich zugänglichen und mit Klemmelement versehenen Kabeldurchgriffsöffnung, **dadurch gekennzeichnet,** daß das Entlastungsstück (1) an einem von Einführöffnungen (2) freien Längsrand (3) mit einer scharnierartig angelenkten Befestigungsleiste (4) und der die mindestens eine Kabeldurchgriffsöffnung (5) mit Klemmelement (15) aufweisende Teil (6) mit mindestens einer Befestigungsschraubenaufnahme (7) versehen ist.

2. Kabelzugentlastungsstück nach Anspruch 1, **dadurch gekennzeichnet,** daß die Befestigungsleiste (4) und daß die mindestens eine Kabeldurchgriffsöffnung (5) aufweisende Teil (6) aus einem Stück aus Kunststoff gebildet sind und der scharnierartige Verbindungsbereich (8) in Form einer Knickkerbe (9) ausgebildet ist.

3. Kabelzugentlastungsstück nach Anspruch 1 oder 2, **dadurch gekennzeichnet,** daß die Aufnahme (7) in Form eines Sockels (7') mit Durchgangsbohrung (10) ausgebildet und in der Bohrung (10) das Klemmelement in Form einer Halteschraube (11) mit einem gewindefreien Bohrungsdurchgriffsschaft (12) zwischen Schraubenkopf (13) und mit Gewinde (14) versehenem Schraubenende angeordnet ist.

4. Kabelzugentlastungsstück nach einem der Ansprüche 1 bis 3, **dadurch gekennzeichnet,** daß das Klemmelement (15) aus einem begrenzt elastischen Kunststoff-Gewindestift (24) gebildet und dieser kabelandruckseitig mit einem Sperrkopf (18) versehen ist, dessen Durchmesser geringfügig größer ist als der Innendurchmesser der Gewindeaufnahme (19), wobei zwischen Sperrkopf (18) und Gewindeende (20) des Gewindestiftes (24) dieser ein gewindefreies Zwischenstück (21) aufweist mit einem Durchmesser kleiner als der Gewindeinnendurchmesser und einer Länge (L) größer als die der Gewindeaufnahme (19).

5. Kabelzugentlastungsstück nach Anspruch 4, **dadurch gekennzeichnet,** daß der Sperrkopf (18) in Form eines Kegelstumpfes ausgebildet ist.

6. Kabelzugentlastungsstück nach Anspruch 4 oder 5, d a**dadurch gekennzeichnet,** daß die sich entsprechenden Gewinde der Gewindeaufnahme (19) und des Gewindestiftes (24) als Zwischennormgewindegrößen, vorzugsweise M 7- oder M 9-Gewinde ausgebildet sind.

**Claims**

1. A relief piece for use with cable assemblies, including at least one laterally accessible cable passage opening provided with a clamping element, characterized in that the relief piece (1), on a longitudinal edge (3) clear of inlet openings (2), is provided with a fixing ledge (4) pivoted thereto in hinge-type manner, and that the part (6) comprising the at least one cable passage opening (5) with clamping element (15) exhibits at least one set screw mount (7).

2. A relief piece for use with cable assemblies according to claim 1, characterized in that the fixing ledge (4) and the part (6) comprising the at least one cable passage opening (5) are integrally formed of plastic material and that the hinge-type connecting area (8) is configured as a V-shaped notch (9).

**3.** A relief piece for use with a cable assembly according to claims 1 or 2, characterized in that the mount (7) is in the form of a socket (7') provided with the passage bore (10) and that, within the bore (10), the clamping element in the form of a holding screw (11) having an unthreaded bore passage shaft (12) is disposed between screw head (13) and threaded (14) screw end.

**4.** A relief piece for use with cable assemblies according to any one of claims 1 to 3, characterized in that the claming element (15) is in the form of a threaded pin (24) of plastic material of a limited flexibility, which pin, on the cable contact side, is provided with a blocking head (18) the diameter of which is slightly larger than the inside diameter of the thread mount (19), with the threaded pin (24), between the blocking head (18) and the end (20) of tile threaded pin (24), comprising an unthreaded intermediate piece (21) of a diameter smaller than the inside diameter of the thread and of a length (L) greater than the one of the thread mount (19).

**5.** A relief piece for use with cable assemblies according to claim 4, characterized in that the blocking head (18) is in the form of a truncated cone.

**6.** A relief piece for use with cable assemblies according to claims 4 or 5, characterized in that the threads of the thread mount (19) and of the threaded pin (24) corresponding to one another have intermediate-standard thread sizes, and, preferably, are formed as M 7- or M 9-type threads.

**Revendications**

**1.** Pièce de décharge de traction pour câble avec au moins une ouverture de pénétration de câble accessible latéralement et pourvue d'un élément de serrage, **caractérisée en ce** que la pièce de décharge de traction pour câble (1) est pourvue d'une baguette de fixation (4) articulée à la manière d'une charnière sur un bord longitudinal (3) qui ne porte pas d'ouvertures d'introduction (2) et que la partie (6) qui présente au moins une ouverture de pénétration du câble (5) avec élément de serrage (15) est pourvue d'au moins un logement pour vis de fixation (7).

**2.** Pièce de décharge de traction pour câble selon la revendication 1, **caractérisée en ce** que la baguette de fixation (4) et la partie (6) qui présente au moins une ouverture de pénétration pour câble (5) sont formées en une pièce en matière plastique et que la zone de jonction de type charnière (8) est configurée en forme d'encoche articulée (9).

**3.** Pièce de décharge de traction pour câble selon la revendication 1 ou 2, **caractérisée en ce** que le logement (7) est configuré en forme de socle (7') avec un perçage de passage (10) et que l'élément de serrage en forme de vis de retenue (11) avec une tige de pénétration de perçage (12) entre la tête de la vis (13) et l'extrémité de la vis pourvue du filet (14) est placé dans le perçage (10).

**4.** Pièce de décharge de traction pour câble selon l'une des revendications 1 à 3, **caractérisée en ce** que l'élément de serrage (15) est formé par une vis sans tête en matière plastique (24) d'une élasticité limitée et que celle-ci est pourvue, du côté du serrage du câble, d'une tête d'arrêt (18) dont le diamètre est légèrement supérieur au diamètre intérieur du logement de filet (19), la vis sans tête présentant une partie intermédiaire (21) sans filet entre la tête d'arrêt (18) et l'extrémité du filet (20) de celle-ci avec un diamètre inférieur au diamètre intérieur du filet et une longueur (L) supérieure à celle du logement de filet (19).

**5.** Pièce de décharge de traction pour câble selon la revendication 4, **caractérisée en ce** que la tête d'arrêt (18) est configurée en forme de cône tronqué.

**6.** Pièce de décharge de traction pour câble selon la revendication 4 ou 5, **caractérisée en ce** que les filets du logement de filet (19) et de la vis sans tête (24) qui se correspondent sont configurés comme des tailles de filets standardisés intermédiaires, de préférence comme des vilets M7 ou M9.

Fig. 1

Fig.2

Fig.3